(19) Europäisches Patentamt
European Patent Office
Office européen des brevets

(11) **EP 4 290 601 A1**

(12) **EUROPEAN PATENT APPLICATION**
published in accordance with Art. 153(4) EPC

(43) Date of publication:
**13.12.2023 Bulletin 2023/50**

(21) Application number: **22749719.5**

(22) Date of filing: **02.02.2022**

(51) International Patent Classification (IPC):
*H01M 4/13* (2010.01)    *H01M 4/139* (2010.01)
*H01M 4/62* (2006.01)    *H01M 10/052* (2010.01)

(52) Cooperative Patent Classification (CPC):
**H01M 4/13; H01M 4/139; H01M 4/62;**
**H01M 10/052; Y02E 60/10**

(86) International application number:
**PCT/JP2022/003970**

(87) International publication number:
**WO 2022/168847 (11.08.2022 Gazette 2022/32)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **05.02.2021 JP 2021017338**

(71) Applicant: **Kuraray Co., Ltd.**
**Kurashiki-shi, Okayama 710-0801 (JP)**

(72) Inventors:
• **KOBAYASHI, Shohei**
**Kurashiki-shi, Okayama 710-0801 (JP)**
• **NISHIMURA, Shushi**
**Bizen-shi, Okayama 705-0025 (JP)**
• **IWASAKI, Hideharu**
**Osaka-shi, Osaka 530-8611 (JP)**

(74) Representative: **Müller-Boré & Partner**
**Patentanwälte PartG mbB**
**Friedenheimer Brücke 21**
**80639 München (DE)**

(54) **POSITIVE ELECTRODE ADDITIVE FOR NONAQUEOUS ELECTROLYTE SECONDARY BATTERY, POSITIVE ELECTRODE ACTIVE MATERIAL COMPOSITION FOR NONAQUEOUS ELECTROLYTE SECONDARY BATTERY CONTAINING SAID ADDITIVE, POSITIVE ELECTRODE FOR NONAQUEOUS ELECTROLYTE SECONDARY BATTERY, AND NONAQUEOUS ELECTROLYTE SECONDARY BATTERY PROVIDED WITH SAME**

(57) The present invention provides an additive for nonaqueous electrolyte secondary battery positive electrodes, which can improve the electrical conductivity of electrodes, decrease the resistance of electrodes, and increase the use efficiency of cation species such as lithium ions, sodium ions, various quaternary ammonium salts, and phosphonium salts.

An additive for nonaqueous electrolyte secondary battery positive electrodes, comprising a carbonaceous material having a specific surface area as determined by the BET method of from 1,000 $m^2$/g to 2,000 $m^2$/g, a micropore volume as determined by the DFT method of less than 0.60 $cm^3$/g, and an oxygen content as measured by elemental analysis of 0.5% by mass or more and less than 1.3% by mass is disclosed.

**Description**

TECHNICAL FIELD

The present patent application claims Paris Convention priority from JP 2021-017338 A (filing date: February 5, 2021), which is incorporated herein by reference in its entirety.

The present invention relates to a positive electrode additive for nonaqueous electrolyte secondary batteries, a positive electrode active material composition for nonaqueous electrolyte secondary batteries containing said additive, a positive electrode for nonaqueous electrolyte secondary batteries, and a nonaqueous electrolyte secondary battery provided with the same.

BACKGROUND ART

Electrochemical elements such as lithium-ion secondary batteries (nonaqueous electrolyte secondary batteries), which have recently gathered attention as power sources for portable small electronic devices, are batteries that use organic electrolyte solutions, exhibit a discharge voltage two or more times as high as that of batteries using conventional alkaline solutions, and exhibit a high energy density. As positive electrode active materials for lithium-ion secondary batteries, oxides composed of lithium and transition metals having a structure allowing for lithium intercalation, such as $LiCoO_2$, $LiMn_2O_4$, and $LiNi_{1-x}Co_xO_2$ (0<X<1), are mainly used.

Since the lithium-ion secondary batteries use nonaqueous electrolytes, water inside the batteries may cause impairment of the safety. Furthermore, the metallic oxides that are positive electrode active materials used in lithium-ion secondary batteries are weak in water and easily decomposed. Furthermore, in recent years, attempts have been made to increase the Ni content to improve the battery capacity of the positive electrode, and the effect of the presence of water on performance tends to be more significant. The presence of water promotes elution of Ni, which precipitates on the negative electrode side via the Shuttle reaction and significantly reduces the battery stability.

Patent Documents 1 and 2 disclose technologies related to lithium-ion secondary batteries, which can reduce the decrease in battery capacity by effectively removing water inside the battery. The technology disclosed in Patent Document 1 prevents the reduction of the capacity of a lithium-ion secondary battery by adding water adsorbents such as zeolite, activated alumina, activated carbon, and silica gel to the inside of the lithium-ion secondary battery and thereby effectively removing water from the battery. Patent Document 2 illustrates a group of zeolites containing lithium.

Patent Document 3 illustrates the addition of activated carbon with electric double layer capacity to the positive electrode of a lithium-ion secondary battery. Patent Document 4 discloses a nonaqueous alkali metal-type electricity storage device using activated carbon as a positive electrode active material. Specifically, Patent Document 4 demonstrates that, when activated carbon is added to a positive electrode active material, the positive electrode active material contained in the positive electrode active material layer, when the amount of mesopores derived from micropores having diameters from 20 Å to 500 Å, calculated by the BJH method, is V1 (cc/g), and the amount of mesopores derived from micropores having diameters of less than 20 Å, calculated by the MP method, is V2 (cc/g), satisfies $0.3 < V1 \leq 0.8$ and $0.5 \leq V2 \leq 1.0$, and the specific surface area as measured by the BET method is from 1500 $m^2$/g to 3000 $m^2$/g.

Patent Document 5 illustrates the use of an activated carbon as an electrode of an electric double-layer capacitor, the activated carbon having a controlled specific surface area and amount of functional groups after heat treatment of the activated carbon.

PRIOR ART REFERENCES

PATENT DOCUMENTS

Patent Document 1: JP2001-126766A
Patent Document 2: JP2014-26819A
Patent Document 3: JP2004-296431A
Patent Document 4: JP2020-13881A
Patent Document 5: JP5027849B

## SUMMARY OF THE INVENTION

### PROBLEMS TO BE SOLVED BY THE INVENTION

As described in the background, the technology disclosed in Patent Document 1 prevents the reduction of the capacity of a lithium-ion secondary battery by adding water adsorbent to the inside of the lithium-ion secondary battery and removing water from the battery.

However, the water adsorbent provided inside the lithium-ion secondary battery will be an unnecessary component after it absorbs water. In other words, the water adsorbent after absorbing water does not contribute to the improvement of the battery properties in itself, and thus the unnecessary component will continue to exist inside the battery. It is not desirable that unnecessary components continue to exist inside a battery in this way from the viewpoint of improvement of the battery properties. For this problem, Patent Document 2 discloses zeolite that contains Li and contributes to the capacity, but the zeolite is still a non-conductive material, and there is still room for improvement as a measure for keeping the positive electrode capacity from decreasing.

It has been demonstrated that the electrode for lithium secondary batteries described in Patent Document 3 must have 20 Å or more and a pore volume of 0.418 cc/g or more as a material having electric double layer capacity (activated carbon). However, adsorption of anions on such an activated carbon having an excessive mesopore volume is strong, and may reduce the ion diffusion properties, resulting in reduced electrical conductivity and increased direct current resistance.

The invention described in Patent Document 4 is used in devices utilizing non-Faradaic reactions, such as lithium-ion capacitors, and substantially uses activated carbon having relatively large mesopore volume and micropore volume, and also has a large amount of activated carbon added. The invention also specializes in outputting, and thus does not take into consideration the viewpoint of compatibility as a secondary battery, i.e., actual capacity and direct current resistance of the positive electrode.

Patent Document 5 relates to methods of producing activated carbon used in electric double-layer capacitors, and does not describe nonaqueous electrolyte secondary batteries such as lithium-ion secondary batteries. Patent Document 5 also does not describe the amount of micropores that express the capacity of electric double-layer capacitors, and thus does not refer to the compatibility as a lithium-ion battery positive electrode.

In light of the above problems, objects of the present invention are to provide an additive for nonaqueous electrolyte secondary battery positive electrodes, which can improve the electrical conductivity of electrodes, decrease the resistance of electrodes, and increase the use efficiency of cation species such as lithium ions, sodium ions, various quaternary ammonium salts, and phosphonium salts; a positive electrode active material composition for nonaqueous electrolyte secondary batteries comprising the additive for nonaqueous electrolyte secondary battery positive electrodes; a positive electrode comprising a layer composed of the composition and a collecting electrode; and a nonaqueous electrolyte secondary battery comprising the positive electrode. In particular, the objects are to provide an additive for nonaqueous electrolyte secondary battery positive electrodes, which can improve the electrical conductivity of electrodes, decrease the resistance of electrodes, and increase the use efficiency of cation species even when positive electrode active materials where the presence of water has a more significant effect on the performance are used; a positive electrode active material composition for nonaqueous electrolyte secondary batteries comprising the additive for nonaqueous electrolyte secondary battery positive electrodes; a positive electrode comprising a layer composed of the composition and a collecting electrode; and a nonaqueous electrolyte secondary battery comprising the positive electrode.

### MEANS FOR SOLVING THE PROBLEMS

Accordingly, the present invention includes the following aspects.

[1] An additive for nonaqueous electrolyte secondary battery positive electrodes, comprising a carbonaceous material having a specific surface area as determined by the BET method of from 1,000 $m^2$/g to 2,000 $m^2$/g, a micropore volume as determined by the DFT method of less than 0.60 $cm^3$/g, and an oxygen content as measured by elemental analysis of 0.5% by mass or more and less than 1.3% by mass.

[2] The additive for nonaqueous electrolyte secondary battery positive electrodes according to [1], wherein the percentage of the oxygen content in quinone groups as measured by Boehm titration of surface functional groups with respect to the oxygen content as measured by elemental analysis is from 30% to 70%.

[3] The additive for nonaqueous electrolyte secondary battery positive electrodes according to [1] or [2], wherein the average particle size of the carbonaceous material is from 2 $\mu$m to 20 $\mu$m.

[4] The additive for nonaqueous electrolyte secondary battery positive electrodes according to any one of [1] to [3], wherein the mesopore volume of the carbonaceous material as determined by the DFT method is 0.35 $cm^3$/g or less.

[5] A positive electrode active material composition for nonaqueous electrolyte secondary batteries comprising an additive for nonaqueous electrolyte secondary battery positive electrodes according to any one of [1] to [4], a positive electrode active material, and a binder.

[6] The positive electrode active material composition for nonaqueous electrolyte secondary batteries according to [5], wherein the amount of the additive for nonaqueous electrolyte secondary battery positive electrodes contained with respect to the total mass of the positive electrode active material composition is 10% by mass or less.

[7] A positive electrode for nonaqueous electrolyte secondary batteries comprising a positive electrode active material layer composed of a positive electrode active material composition for nonaqueous electrolyte secondary batteries according to [5] or [6], and a collector.

[8] A nonaqueous electrolyte secondary battery comprising a positive electrode according to [7].

[9] The nonaqueous electrolyte secondary battery according to [8], which operates at 2 V to 5 V.

EFFECT OF THE INVENTION

According to the present invention, an additive for nonaqueous electrolyte secondary battery positive electrodes, which can improve the electrical conductivity of electrodes, decrease the resistance of electrodes, and increase the use efficiency of cation species such as sodium ions, various quaternary ammonium salts, and phosphonium salts; a positive electrode active material composition for nonaqueous electrolyte secondary batteries comprising the additive for nonaqueous electrolyte secondary battery positive electrodes; a positive electrode comprising a layer composed of the composition and a collecting electrode; and a nonaqueous electrolyte secondary battery comprising the positive electrode can be provided. According to the present invention, in particular, the electrical conductivity of electrodes can be improved, the resistance of electrodes can be decreased, and the use efficiency of cation species can be increased, even when positive electrode active materials where the presence of water has a more significant effect on the performance are used.

DETAILED DESCRIPTION OF THE INVENTION

An embodiment of the present invention will be described in detail below. However, it is presented for illustration and does not limit the present invention, and the present invention is defined by the claims.

(Additive for Nonaqueous Electrolyte Secondary Battery Positive Electrodes)

The additive for nonaqueous electrolyte secondary battery positive electrodes of the present invention comprises a carbonaceous material having a specific surface area as determined by the BET method of from 1,000 $m^2/g$ to 2,000 $m^2/g$, a micropore volume as determined by the DFT method of less than 0.60 $cm^3/g$, and an oxygen content as measured by elemental analysis of from 0.5% by mass to 1.3% by mass.

A carbonaceous material used for the present invention has a specific surface area as determined by the BET method of from 1,000 $m^2/g$ to 2,000 $m^2/g$. When the specific surface area is within the range, water present in the battery can be sufficiently absorbed, and the mechanical strength can be maintained, preventing the deterioration of battery performance, such as release from the electrode and short circuit during charging/discharging due to powdering in the battery. The specific surface area as determined by the BET method is preferably 1,100 $m^2/g$ or more, and more preferably 1,150 $m^2/g$ or more. The specific surface area as determined by the BET method is also preferably 1,900 $m^2/g$ or less, and more preferably 1,850 $m^2/g$ or less.

A carbonaceous material used for the present invention has a micropore volume as determined by the DFT method using nitrogen adsorption of less than 0.60 $cm^3/g$. As used herein, the term "micropore" refers to a pore having a pore diameter of less than 2 nm. When the micropore volume is less than 0.60 $cm^3/g$, water that has been adsorbed on the carbonaceous material itself can be reduced, a drying process during battery preparation can be simplified and shortened, and the loss of activity of the battery active material can be prevented. The micropore volume is preferably 0.58 $cm^3/g$ or less, more preferably 0.55 $cm^3/g$ or less, still more preferably 0.53 $cm^3/g$ or less, and particularly preferably 0.52 $cm^3/g$ or less. The micropore volume is preferably 0.35 $cm^3/g$ or more, more preferably 0.38 $cm^3/g$ or more, and still more preferably 0.40 $cm^3/g$ or more, in order to adsorb, water and electrolyte decomposition products in the battery, thereby contributing to the stabilization of the battery behavior.

The carbonaceous material used in the present invention preferably has a pore volume (mesopore volume) with a pore diameter of 2 nm or more, as measured in pore distribution analysis by the DFT method using the nitrogen adsorption method, of 0.35 $cm^3/g$ or less, more preferably 0.33 $cm^3/g$ or less, still more preferably 0.30 $cm^3/g$ or less, and particularly preferably 0.25 $cm^3/g$ or less. In addition, the lower limit is preferably 0.02 $cm^3/g$ or more, and more preferably 0.04 $cm^3/g$ or more. When the mesopore volume falls within the ranges, the carbonaceous material has excellent electrolyte retaining properties, and thus can maintain an environment with sufficient electrolytes around the positive electrode active material in the positive electrode, thereby providing a fast ion transfer environment. This can improve the high-rate properties. In addition, such electrolyte retaining properties allow for prevention of electrolyte depletion in the positive electrode and maintenance of the ion transfer environment around the active material while the charge-discharge cycle is in progress, and thus the cycle life can be improved.

In the carbonaceous material used in the present invention, the oxygen content as measured by elemental analysis is 0.5% by mass or more and less than 1.3% by mass. The method of measuring the oxygen content as measured by elemental analysis is described in Examples below. When the oxygen content is not less than the lower limit described above, the affinity with the electrolyte solution is moderately maintained, and thus the penetration of the electrolyte solution into the electrode is less likely to be inhibited. When the oxygen content is not more than the upper limit described above, the electrochemical stability is maintained, and the affinity with a hydrophobic binder, such as PVDF, is also maintained. When the oxygen content is within the ranges described above, oxygen on the surface of the carbonaceous material inhibits attraction and adsorption of water while maintaining the affinity with the electrolyte solution, thereby avoiding electrolysis of the electrolyte solution, resulting in improved charging efficiency, and further contributing to reduced direct current resistance by avoiding the coating of decomposition products. There are increasing risks that metals leached from positive electrodes, especially nickel that is easily eluted in coordinating solvents such as N-methylpyrrolidone, in an enhanced trend of lower water durability because of the use of nickel-cobalt-manganese co-oxides as lithium ion battery positive electrode materials accompanied by recent increase in battery capacity will extract fluorine from polyvinylidene fluoride, the binder, during electrode preparation, resulting in gelation, and furthermore, nickel will grow on negative electrodes due to charging and discharging during battery operation. Oxygen present on the surface of the carbonaceous material has the effect of coordinating with leached nickel and thereby reducing the above concerns. The oxygen content is preferably 0.52% by mass or more. The oxygen content is also preferably 1.25% by mass or less.

In the carbonaceous material used in the present invention, the percentage of the oxygen content in quinone groups as measured by Boehm titration of surface functional groups with respect to the oxygen content as measured by elemental analysis (the oxygen content in quinone groups as measured by Boehm titration of surface functional groups/the oxygen content as measured by elemental analysis $\times$ 100 [%]) is preferably from 30% to 70%. The measuring method for Boehm titration is described in Examples below. The percentage is more preferably 33% or more, and still more preferably 35% or more. The percentage is more preferably 60% or less, still more preferably 59% or less, and particularly preferably 58% or less. Quinone functional groups on the surface of the carbonaceous material may be due to cases where quinone present on the surface of the raw material of the carbonaceous material remains intact during carbonaceous material production, where quinone functional groups are formed by dehydrogenation of phenolic functional groups during formation of aromatic nucleus in carbonaceous materials, where generation of quinone functional groups are induced by, for example, carboxylic acid desorption from the surface of carbonaceous materials, and other cases. It is assumed that when quinone functional groups are in a certain ratio to the total oxygen content, quinone functional groups can not only lower the abundance of carbonyl groups that are easily thermally decomposed, and prevent gas generation induced by the decomposition of functional groups in the battery without losing affinity with the electrolyte solution and binder, but also significantly reduce hygroscopicity, contributing to simplification of the battery manufacturing process and battery stability.

The carbonaceous material used in the present invention preferably has an ash content of 0.5% by mass or less, more preferably 0.48% by mass or less, and still more preferably 0.46% by mass or less. The possibility that heavy metal compounds contained in the ash diffuse in the positive electrode and precipitate during discharge cannot be denied, and for this reason, in particular, the nickel content is preferably 100 ppm or less, and more preferably 80 ppm or less. The iron content is preferably 100 ppm or less, and more preferably 50 ppm or less.

The average particle size (D50) of the carbonaceous material used in the present invention as determined by a laser scattering method is preferably from 2 $\mu$m to 20 um. When the average particle size is not more than the upper limit, the electrical conductivity inside the positive electrode is easily maintained. When the average particle size is not less than the lower limit, the carbonaceous material can be sufficiently bound with a binder or the like, preventing finely divided carbonaceous materials from being released from the inside of the electrode and causing deterioration of the battery performance, such as short circuit.

The carbonaceous precursor of the carbonaceous material used in the present invention is not particularly limited, and illustrative examples thereof include plant materials such as, coconut shells, coffee beans, tea leaves, sugar cane, fruits (e.g., mandarin oranges, bananas), straw, rice husks, hardwoods, softwoods, and bamboo; processed plant materials, such as lignin and lignocellulose; thermosetting resins, such as phenolic resins, furan resins, and melamine resins; and fossil fuels, such as coal, coal pitch, and petroleum pitch. These raw materials may be used alone or in combination of two or more. Among these plant raw materials, the plant-derived raw materials are preferable, and coconut shells are preferable because they can be easily obtained and carbonaceous materials having various characteristics can be produced.

Examples of the coconut shells include, but not particularly limited to, coconut shells such as of palm trees (oil palms), coconut trees, salak, and double coconut trees. These coconut shells may be used alone or in combination of two or more. Coconut shells from coconut trees and palm trees, which are biomass wastes generated in large quantities after palm fruits are used as foods, detergent raw materials, biodiesel oil raw materials, and the like, are particularly preferably from the viewpoint of easy availability.

The carbonaceous material used in the present invention can be produced by a method comprising obtaining a carbonaceous material by carbonizing a carbonaceous precursor, followed by primary activation, washing, optional higher-level activation, and further heat treatment.

The carbonization and activation methods are not particularly limited, and the production can be made, for example, by known methods such as immobilized bed, moving bed, fluid bed, multiple bed, and rotary kiln.

In the method of producing the carbonaceous material used in the present invention, a carbonaceous precursor (suitably, a plant-derived carbonaceous precursor) is first carbonized. The carbonization method is not particularly limited, and may be a method comprising firing at a temperature of about 400 to 800°C under an atmosphere of an inert gas, such as nitrogen, carbon dioxide, helium, argon, carbon monoxide, or an exhausted fuel gas, a mixed gas of the inert gas, or a mixed gas of the inert gas as main components and other gas.

After the carbonaceous precursor is carbonized, it is subjected to primary activation. Activation methods include gas activation and chemical activation methods, among which a gas activation method is preferable in the present invention from the viewpoint of less impurity residues. The gas activation method can be performed by allowing the carbonized carbonaceous precursor to react with an activation gas (for example, water vapor or carbon dioxide gas).

In the primary activation, from the viewpoint of efficient progression of activation, the same mixture of inert gas and water vapor as that used in carbonization is preferable, and the partial pressure of the water vapor in this case is preferably in a range from 10 to 60%. When the partial pressure of water vapor is 10% or more, the activation is likely to be sufficiently progressed. When the partial pressure is 60% or less, rapid activation reaction is prevented, and the reaction is easily controlled.

The total amount of the activation gas supplied during the primary activation, relative to 100 parts by mass of the carbonaceous precursor, is preferably from 50 to 10,000 parts by mass, more preferably from 100 to 5,000 parts by mass, and still more preferably from 200 to 3,000 parts by mass. When the total amount of the activation gas supplied is within the range, the activation reaction can be progressed more efficiently.

The activation temperature in the primary activation is usually from 700 to 1,100°C, and preferably from 800 to 1,000°C. The activation time and the temperature rising rate are not particularly limited, and of course varied depending on, for example, the type, shape, size, and desired pore diameter distribution of the selected plant-derived carbonaceous precursor. It is noted that higher activation temperature or longer activation time in the primary activation tends to increase the BET specific surface area of the obtained carbonaceous material. Therefore, the activation temperature and/or activation time is/are adjusted in order to obtain a carbonaceous material having a BET specific surface area within a desired range.

Next, the carbonaceous material obtained after the primary activation is washed for ash reduction. The washing can be made by immersing the carbonaceous material obtained after the primary activation in a washing solution containing an acid. The washing solution may be, for example, a mineral acid or an organic acid. Examples of the mineral acid include hydrochloric acid and sulfuric acid. Examples of the organic acid include saturated carboxylic acids, such as formic acid, acetic acid, propionic acid, oxalic acid, tartaric acid, and citric acid; and aromatic carboxylic acids, such as benzoic acid and terephthalic acid. The acid used in the washing solution is preferably a mineral acid, and more preferably hydrochloric acid from the viewpoint of the washing properties. After washing using an acid, additional washing using water or the like is preferably carried out to remove excess acid. This operation can reduce the load on the activation equipment during and after the secondary activation that will be optionally performed.

The washing solution can be prepared typically by mixing an acid and an aqueous solution. The aqueous solution may be, for example, water, or a mixture of water and an aqueous organic solvent. Examples of the aqueous organic solvent include alcohols such as methanol, ethanol, propylene glycol, and ethylene glycol.

The concentration of the acid in the washing solution is not particularly limited, and may be adjusted as appropriate depending on the type of the acid used. The acid concentration of the washing solution based on the total amount of the washing solution is preferably from 0.01 to 3.5% by mass, more preferably from 0.02 to 2.2% by mass, and still more preferably from 0.03 to 1.6% by mass. It is preferable that the concentration of the acid in the washing solution is within the range, because impurities contained in the carbonaceous material can be efficiently removed.

The temperature of the washing solution when the carbonaceous material is immersed is not particularly limited, and is preferably from 0 to 98°C, more preferably from 10 to 95°C, and still more preferably from 15 to 90°C. It is desirable that the temperature of the washing solution when the carbonaceous material is immersed is within the range, because washing can be performed with practical time and reduced load on the equipment.

The method of washing the carbonaceous material is not particularly limited as long as the carbonaceous material can be immersed in a washing solution, and may be a method comprising continuous addition of a washing solution, retention for a predetermined time, and extraction, during which immersion is performed, or may be a method comprising immersion of the carbonaceous material in a washing solution, retention for a predetermined time, removing of the washing solution, addition of a fresh washing solution, and repetition of immersion and removing of the washing solution. A method in which all the washing solution is renewed may be used, or a method in which a part of the washing solution is renewed may be used. The time during which the carbonaceous material is immersed in a washing solution can be adjusted as appropriate depending on, for example, the acid used, the concentration of the acid, and the treatment temperature.

The washing time is not particularly limited, and is preferably from 0.05 to 4 hours, and more preferably from 0.1 to 3 hours from the viewpoint of economic efficiency of the reaction equipment and maintainability of the carbonaceous material structure.

The mass ratio between the washing solution and the carbonaceous material when the carbonaceous material is immersed in the washing solution may be adjusted as appropriate depending on, for example, the type, concentration, and temperature of the washing solution used. The mass of the carbonaceous material to be immersed relative to the mass of the washing solution is usually from 0.1 to 50% by mass, preferably from 1 to 20% by mass, and more preferably from 1.5 to 10% by mass. It is desirable that the mass is within the ranges because impurities eluted in the washing solution are unlikely to precipitate out of the washing solution, resulting in easier prevention of reattachment to the carbonaceous material and appropriate volumetric efficiency, and thus from the viewpoint of the economy.

The atmosphere in which the washing is performed is not particularly limited, and may be selected as appropriate depending on the method used for the washing. In the present invention, the washing is usually performed in an atmospheric atmosphere.

In the production of the carbonaceous material used in the present invention, the carbonaceous material obtained after the primary activation followed by washing may be subjected to secondary activation. The secondary activation can be performed under the conditions ranging as the primary activation. It is noted that, similarly for the secondary activation, higher activation temperature or longer activation time tend to increase the BET specific surface area of the obtained carbonaceous material. Therefore, the activation temperature and/or activation time may be adjusted in order to obtain a carbonaceous material having a BET specific surface area within a desired range.

After the secondary activation, tertiary activation may further be performed, and higher-order activation may be performed. Washing may also be performed between activations after the secondary activation. Up to secondary activation or tertiary activation is preferably performed from the viewpoint of economy. In the present invention, tertiary activation and even higher-order activation can be performed under the conditions ranging as the primary activation.

The carbonaceous material obtained after the secondary activation or higher-order activation can further be washed to remove ash and metal impurities contained in the carbonaceous material.

The carbonaceous material used in the present invention can be obtained by heat treatment of the carbonaceous material obtained after primary activation or secondary activation or higher-order activation. By performing the heat treatment, the surface properties of the carbonaceous material can be adjusted. Specifically, water and the like adsorbed on the carbonaceous material can be removed, furthermore functional groups newly produced by washing and the like can be removed, and the micropore amount can be adjusted. The heat treatment is performed by heating the carbonaceous material in the presence of an inert gas, such as nitrogen, argon, or carbon dioxide. Alternatively, in addition of the heat treatment, or instead of inert gas, the carbonaceous material can be prepared by performing heat treatment, for example, by means of reduced pressure or reduced-pressure heating.

The temperature of the heat treatment is preferably 500°C or higher, more preferably 550°C or higher, still more preferably 600°C or higher, still more preferably 700°C or higher, and particularly preferably 800°C or higher from the viewpoint of adjustment of micropores of the carbonaceous material. The temperature of the heat treatment is preferably 1200°C or less, more preferably 1150°C or less, and still more preferably 1100°C or less.

The time period of the heat treatment depends on the temperature of the heat treatment to be selected, and is preferably 0.1 hours or more, more preferably 0.5 hours or more, and still more preferably 1 hour or more from the viewpoint of adjustment of the carbonaceous material. The time period of the heat treatment is preferably 24 hours or less, more preferably 18 hours or less, and still more preferably 10 hours or less from the viewpoint of economy.

In the present invention, the thus-obtained carbonaceous material may then be pulverized. The pulverization method is not particularly limited, and a known pulverization method, such as ball mill, roll mill, or jet mill, or a combination thereof can be used.

In the present invention, the carbonaceous material obtained by pulverization may be classified. For example, by removing particles having a particle diameter of 1 $\mu$m or less, particles of a carbonaceous material having narrow particle size distribution width can be obtained. By means of such removal of microparticles, the amount of the binder in formation of the electrode can be reduced. The classification method is not particularly limited, and may be, for example, classification using a sieve, wet classification, or dry classification. Exemplary wet classifiers include classifiers utilizing the principles of gravity classification, inertial classification, hydraulic classification, centrifugal classification, and the like. Exemplary dry classifiers include classifiers utilizing the principles of sedimentation classification, mechanical classification, centrifugal classification, and the like. A dry classifier is preferably used from the viewpoint of economy.

The carbonaceous material obtained as described above can be preferably used as an additive for nonaqueous electrolyte secondary battery positive electrodes of the present invention.

The positive electrode active material composition for nonaqueous electrolyte secondary batteries of the present invention (also referred to as the composition for nonaqueous electrolyte secondary battery positive electrodes) comprises the above-described additive for nonaqueous electrolyte secondary battery positive electrodes, a positive electrode active material, and a binder. The composition for nonaqueous electrolyte secondary battery positive electrodes of the present invention may also comprise any component other than those described above.

The amount of the additive for nonaqueous electrolyte secondary battery positive electrodes contained with respect to the total mass of the solid content of the composition for nonaqueous electrolyte secondary battery positive electrodes is preferably 10% by mass or less, more preferably 8% by mass or less, and still more preferably 6% by mass or less. The lower limit of the amount of the additive for positive electrodes contained is not particularly limited, and is preferably 0.5% by mass or more, and more preferably 1 % by mass or more.

The mixing ratio of the additive for nonaqueous electrolyte secondary battery positive electrodes to a positive electrode active material described below may be from 1:99 to 10:90 in mass ratio. When the mixing ratio of the additive for nonaqueous electrolyte secondary battery positive electrodes to a positive electrode active material falls within the range, the output characteristics and capacitance characteristics to be obtained are all excellent.

(Positive Electrode Active Material)

The positive electrode active material contained in the composition for nonaqueous electrolyte secondary battery positive electrodes is not particularly limited, and known positive electrode active materials can be used. For example, metallic oxides such as lithium-containing cobalt oxide ($LiCoO_2$), lithium manganate ($LiMn_2O_4$), lithium-containing nickel oxide ($LiNiO_2$), lithium-containing Co-Ni-Mn complex oxide, lithium-containing Ni-Mn-Al complex oxide, lithium-containing Ni-Co-Al complex oxide, olivine-type lithium iron phosphate($LiFePO_4$), olivine-type lithium manganese phosphate ($LiMnPO_4$), hyperlithium spinel compounds represented by $Li_{1+x}Mn_{2-x}O_4$ ($0<X<2$), $Li[Ni_{0.17}Li_{0.2}Co_{0.07}Mn_{0.56}]O_2$, and $LiNi_{0.5}Mn_{1.5}O_4$; sulfur; and organic radicals such as compounds and polymers having a nitroxy radical, compounds and polymers having an oxy radical, compounds and polymers having a nitrogen radical, and compounds and polymers having a fulvalene structure.

These may be used alone or in combination of two or more. Among these described above, lithium-containing cobalt oxide ($LiCoO_2$), lithium-containing nickel oxide ($LiNiO_2$), lithium-containing Co-Ni-Mn complex oxide, such as $LiNi_{1/3}Co_{1/3}Mn_{1/3}O_2$, $LiNi_{0.5}Co_{0.2}Mn_{0.3}O_2$, and $LiNi_{0.8}Co_{0.1}Mn_{0.1}O_2$, and lithium-containing Ni-Co-Al complex oxide, such as $LiNi_{0.8}Co_{0.1}Al_{0.1}O_2$ and $LiNi_{0.8}Co_{0.15}Al_{0.05}O_2$ is preferably used as positive electrode active materials from the viewpoint of improving, for example, the battery capacity of the secondary battery.

The particle diameter of the positive electrode active material is not particularly limited, and may be the same as those of positive electrode active materials that are conventionally used. The particle diameter usually ranges from 0.1 um to 40 $\mu$m, and more preferably from 0.5 $\mu$m to 20 $\mu$m.

The amount of the positive electrode active material contained in the positive electrode active material composition in one embodiment of the present invention may be 99% by mass or less, 95% by mass or less, or 90% by mass or less, relative to the total mass of the solid content of the composition. The amount of the positive electrode active material may be 30% by mass or more, 40% by mass or more, or 50% by mass or more.

(Binder)

The composition for nonaqueous electrolyte secondary battery positive electrodes of the present invention contains a binder to allow the positive electrode active material particles to well attach to each other and to allow the positive electrode active material to attach to the current collector. Examples of the binder that may be used include, but not limited to, polyvinyl alcohol, carboxymethylcellulose, hydroxypropylcellulose, diacetyl cellulose, polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, styrene-butadiene rubber, acrylated styrene-butadiene rubber, epoxy resins, and nylon. These may be used alone or in combination. In the composition for nonaqueous electrolyte secondary battery positive electrodes of the present invention, the amount of the binder contained relative to the total mass of the positive electrode in the composition may be from 0.5 to 10% by mass, or from 1 to 7% by mass.

(Conductive Material)

The composition for nonaqueous electrolyte secondary battery positive electrodes of the present invention may further contain a conductive material to further improve the electrical conductivity of the positive electrode formed on the collector. The conductive material that can be used may be any electroconductive material that does not cause chemical changes in the electrochemical element to be formed. Specific examples of the conductive material that may be used include metallic powders and metallic fibers such as natural graphite, synthetic graphite, carbon black, acetylene black, Ketjen Black, carbon fiber, copper, nickel, aluminum, and silver. One or one or more conductive material(s) such as polyphenylene derivatives may be mixed and used. In the composition for nonaqueous electrolyte secondary battery positive electrodes of the present invention, the amount of the conductive material contained relative to the total mass of the solid content in the composition may be from 0.5 to 10% by mass, or from 1 to 7% by mass.

(Solvent)

The composition for nonaqueous electrolyte secondary battery positive electrodes of the present invention may contain a solvent. Examples of the solvent that can be used include organic solvents, and especially polar organic solvents in which the binder described above can be dissolved are preferable. Specific examples of the organic solvent that can be used include acetonitrile, N-methylpyrrolidone, acetylpyridine, cyclopentanone, N,N-dimethylacetamide, dimethylformamide, dimethyl sulfoxide, methylformamide, methyl ethyl ketone, furfural, and ethylenediamine. Among these, N-methylpyrrolidone (NMP) is best preferable from the viewpoints of, for example, ease of handling, safety, and ease of synthesis. These organic solvents may be used alone or in combination of two or more.
The amount of the solvent used is such that the solid content concentration in the composition for electrochemical element positive electrodes ranges preferably from 1 to 80% by mass, more preferably from 5 to 70% by mass, and still more preferably from 10 to 60% by mass. It is preferable that the solid content concentration is within the range because the positive electrode active material, the additive for electrochemical element positive electrodes, and the other component contained can be homogeneously dispersed.

(Method of Producing Composition for Nonaqueous Electrolyte Secondary Battery Positive Electrodes)

As a method of producing the composition for nonaqueous electrolyte secondary battery positive electrodes of the present invention, it can be produced by mixing the above-described additive for nonaqueous electrolyte secondary battery positive electrodes, positive electrode active material, and as necessary solvent and the other components. The mixing method is not particularly limited, and for example, a common mixing machine, such as a disperser, a mill, or a kneader, can be used. For example, it is preferable that stirring is performed for a time period from 20 minutes to 120 minutes.
The temperature at which the mixing is performed is also not particularly limited, and for example, the mixing is performed at a temperature ranging from 0°C to 160°C, and preferably from 20°C to 80°C. Too low temperatures make the viscosity high, which makes coating impossible, and thus are undesirable, while too high temperatures are undesirable from the viewpoints of safety and equipment operativity, such as volatilization of organic solvents and accompanying viscosity changes.

[Nonaqueous Electrolyte Secondary Battery]

Such a composition for nonaqueous electrolyte positive electrodes in one embodiment of the present invention can be effectively used in nonaqueous electrolyte secondary batteries. The present invention also includes an electrochemical element having a positive electrode prepared using the above-described composition for nonaqueous electrolyte secondary battery positive electrodes. The electrochemical element of the present invention comprises the above-describes additive for nonaqueous electrolyte secondary battery positive electrodes, which can improve the electrical conductivity of the positive electrode, to thereby reduce the electrode resistance. The use efficiency of lithium can also be improved, to thereby reduce the irreversible capacity. The nonaqueous electrolyte secondary battery of the present invention preferably operates at 2 V to 5 V, and examples thereof include lithium-ion secondary batteries.
For example, the nonaqueous electrolyte secondary battery of the present invention is a lithium-ion secondary battery, the lithium-ion secondary battery comprises a positive electrode, a negative electrode, and an electrolyte.

(Positive Electrode)

The positive electrode is prepared by using the composition for nonaqueous electrolyte secondary battery positive electrodes of the present invention, and comprises a collector and a positive electrode active material layer. The positive electrode active material layer is formed, for example, by applying the composition for positive electrodes of the present invention to the collector. In many cases, the positive electrode active material layer is used in a manner in which the composition for nonaqueous electrolyte secondary battery positive electrodes is applied to the collector and dried, and is usually composed of the solid content of the composition for nonaqueous electrolyte secondary battery positive electrodes.
The method of applying the composition for nonaqueous electrolyte secondary battery positive electrodes to the collector is not particularly limited, and known methods can be used. Specific examples of the applying method that can be used include a doctor blade method, a dip method, a reverse roll method, a direct roll method, a gravure method, an extrusion method, and a brush application method. In the application method, the composition for positive electrodes may be applied to only one side or both sides of the collector. The thickness of the composition film on the collector after application and before drying may be set as appropriate depending on the thickness of the positive electrode active material layer obtained by drying.

As a collector to which the composition for positive electrodes is applied, a material that has electrical conductivity and electrochemical durability is used. Specifically, a collector that can be made is a collector composed of aluminum or an aluminum alloy. In this case, a combination of aluminum and an aluminum alloy may be used, or a combination of different types of aluminum alloys may be used. Aluminum and aluminum alloys are excellent materials for collectors because of their heat resistance and electrochemical stability.

The method of drying the composition for positive electrodes on the collector is not particularly limited, and known methods can be used. Examples include drying with warm air, hot air, or low-humidity air, vacuum drying, and drying by irradiation of infrared ray, electron beam, or the like. The composition for positive electrodes on the collector can be dried in such a manner to form a positive electrode active material layer on the collector, providing a positive electrode comprising the collector and the positive electrode active material layer.

In particular, to maintain the metal scavenging capacity of the carbonaceous material added, it is preferable that the drying step in the production of the positive electrode is sufficiently carried out. The drying is preferably carried out to the extent that the collector (e.g., aluminum foil) is not affected and to the extent that water adsorbed on the surfaces of the positive electrode active material and the carbonaceous material can be vaporized. The drying is preferably carried out at a drying temperature from 100°C to 160°C, at the atmospheric pressure or reduced pressure, for a time period from 1 hour to 12 hours.

After the drying step, the positive electrode active material layer may be subjected to a compression treatment using a die press machine, a roll press machine, or the like. The compression treatment can improve the adhesion between the positive electrode active material layer and the collector.

The thus-produced positive electrode for nonaqueous electrolyte secondary batteries forms a good electric conductive network in its interior. Therefore, the use of the positive electrode for nonaqueous electrolyte secondary batteries allows the nonaqueous electrolyte secondary battery to have reduced internal resistance, thereby improving the performance of the secondary battery.

(Negative Electrode)

The negative electrode comprises a collector and a negative electrode active material layer formed on the collector, wherein the negative electrode active material layer comprises a negative electrode active material.

The negative electrode active material is a material that is capable of reversible intercalation/deintercalation of lithium ions, including a lithium metal, a lithium metal alloy, a substance capable of doping and dedoping of lithium, or a transition metal oxide.

The material that is capable of reversible intercalation/deintercalation of lithium ions may be a carbon material. Any carbon-based negative electrode active materials that are commonly used in lithium-ion secondary batteries can be used. The representative examples thereof include crystalline carbon and amorphous carbon, which may be used together. The crystalline carbon may be, for example, graphite such as amorphous, plate, squamous, globular, or fibrous natural or synthetic graphite. The amorphous carbon may be, for example, soft carbon or hard carbon, mesophase pitch carbide, or burned coke.

As the lithium metal alloy, an alloy of lithium and a metal selected from the group consisting of Na, K, Rb, Cs, Fr, Be, Mg, Ca, Sr, Si, Sb, Pb, In, Zn, Ba, Ra, Ge, Al, and Sn may be used.

The substance capable of doping and dedoping of lithium may be, for example, Si, SiOx (0<x<2), a Si-Q alloy (wherein Q described above is an element selected from the group consisting of alkali metals, alkali earth metals, Group 13 elements, Group 14 elements, Group 15 elements, Group 16 elements, transition metals, rare earth elements, and combinations thereof, and is not Si), Sn, $SnO_2$, or Sn-R (wherein R described above is an element selected from the group consisting of alkali metals, alkali earth metals, Group 13 elements, Group 14 elements, Group 15 elements, Group 16 elements, transition metals, rare earth elements, and combinations thereof, and is not Sn), at least one of which may be used in combination with SiOz. As the elements Q and R, elements selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof may be used.

The transition metal oxide may be, for example, vanadium oxide or lithium vanadium oxide.

The amount of the negative electrode active material contained in the negative electrode active material layer may be from 90% by mass to 100% by mass, or may be from 95% by mass to 99% by mass, relative to the total mass of the negative electrode active material layer. The negative electrode active material layer may be only composed of a negative electrode.

The negative electrode active material layer comprises a binder, and further optionally comprises a conductive material. The amount of the binder contained in the negative electrode active material layer may be from 1% by mass to 10% by mass relative to the total mass of the negative electrode active material layer. When the negative electrode active material layer further comprises a conductive material, 80% by mass (preferably from 90% by mass) to 98% by mass of the negative electrode active material, 1% by mass to 10% by mass of the binder, and 1% by mass to 10% by mass of the conductive material may be used.

The binder acts to allow the negative electrode active material particles to adhere well to each other, and allow the negative electrode active material to adhere well to the current collector. As the binder, a nonaqueous binder, an aqueous binder, or a combination thereof may be used.

Examples of the nonaqueous binder include polyvinyl chloride, carboxylated polyvinyl chloride, polyvinyl fluoride, ethylene oxide-containing polymers, polyvinylpyrrolidone, polyurethane, polytetrafluoroethylene, polyvinylidene fluoride, polyethylene, polypropylene, polyamide imide, polyimide, and combinations thereof.

Examples of the aqueous binder include styrene-butadiene rubbers, acrylated styrene-butadiene rubbers, polyvinyl alcohol, sodium polyacrylate, copolymers of propylene and olefin having a carbon number of 2 to 8, copolymers of (meth)acrylic acid and an alkyl (meth)acrylate ester, and combinations thereof.

When an aqueous binder is used as the negative electrode binder, a cellulose compound that can impart viscosity may further be used as a thickener. Examples of the cellulose compound include carboxymethylcellulose, hydroxypropylmethylcellulose, methylcellulose, and alkali metal salts thereof, and two or more of them may be used in combination. As the alkali metal, Na, K, or Li may be used. The amount of such a thickener used may be from 0.1 parts by mass to 150 parts by mass relative to 100 parts by mass of the binder.

As the conductive material, any electroconductive material can be used as long as it is used to impart electrical conductivity to an electrode, and does not cause chemical changes in the battery to be constituted. Examples thereof include carbon materials such as natural graphite, synthetic graphite, carbon black, acetylene black, Ketjen Black, carbon fiber; metallic materials such as metallic powders and metallic fibers, such as copper, nickel, aluminum, and silver; conductive polymers, such as polyphenylene derivatives; and conductive materials comprising a mixture thereof.

As the collector, one selected from the group consisting of copper foils, nickel foils, stainless steel foils, titanium foils, nickel foams, copper foams, polymer base materials coated with conductive metals, and combinations thereof may be used.

(Electrolyte)

The electrolyte preferably comprises a nonaqueous organic solvent and a lithium salt.

The nonaqueous organic solvent plays a role as a medium in which ions involved in electrochemical reactions in the battery can move.

As the nonaqueous organic solvent, a carbonate solvent, an ester solvent, an ether solvent, a ketone solvent, an alcohol solvent, or a non-protic solvent may be used. As the carbonate solvent, for example, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC), or butylene carbonate (BC) may be used. As the ester solvent, for example, n-methyl acetate, n-ethyl acetate, n-propyl acetate, dimethyl acetate, methyl propionate, ethyl propionate, $\gamma$-butyrolactone, decanolide, valerolactone, mevalonolactone, or caprolactone may be used. As the ether solvent, for example, dibutyl ether, Tetraglyme, Diglyme, dimethoxyethane, 2-methyltetrahydrofuran, or tetrahydrofuran may be used. As the ketone solvent, for example, cyclohexanone may be used. As the alcohol solvent, for example, ethyl alcohol or isopropyl alcohol may be used. As the non-protic solvent, for example, nitrile such as R-CN (wherein R is a hydrocarbon group having a linear, branched, or ring structure with a carbon number of 2 to 20, and may comprise a double bond an aromatic ring or an ether bond), amide such as dimethylformamide, dioxolane such as 1,3-dioxolane, or sulfolane may be used.

These nonaqueous organic solvents may be used alone or in combination of two or more. When a combination of two or more is used, the mixing ratio may be appropriately adjusted depending on the intended battery performance.

When a carbonate solvent as described above is used, a mixture of a cyclic carbonate and a linear carbonate is preferably used. In this case, a mixture of a cyclic carbonate and a linear carbonate in a volume ratio of 1:1 to 1:9 can be used to achieve better performance of the electrolyte solution.

The lithium salt is a substance playing a role in which it is dissolved in an organic solvent and acts as a source of lithium ions in a battery, enabling basic operations of a lithium-ion secondary battery and promoting the transfer of lithium ions between the positive electrode and the negative electrode. Representative examples of such a lithium salt include $LiPF_6$, $LiBF_4$, $LiSbF_6$, $LiAsF_6$, $LiCF_3SO_3$, $LiN(SO_2C_2F_5)_2$, $Li(CF_3SO_2)_2N$, $LiC_4F_9SO_3$, $LiClO_4$, $LiAlO_4$, $LiAlCl_4$, $LiN(CxF_{2x+1}SO_2)(CyF_{2y+1}SO_2)$ (wherein x and y are natural numbers), LiCl, LiI, and $LiB(C_2O_4)_2$ (lithium bis(oxalate)borate (LiBOB). These may be used alone or in combination of two or more. The lithium salt is preferably used at a concentration ranging from 0.1 to 2.0 M. When the concentration of a lithium salt is less than 0.1 M, the electrical conductivity of the electrolyte tends to decrease, resulting in lower electrolyte performance, and when the concentration is more than 2.0 M, the viscosity of the electrolyte tends to increase, resulting in reduced mobility of lithium ions.

The electrolyte may further contain a vinylene carbonate compound or an ethylene carbonate compound as a life improver to improve the battery life.

Representative examples of the ethylene carbonate compound include difluoroethylene carbonate, chloroethylene carbonate, dichloroethylene carbonate, bromoethylene carbonate, dibromoethylene carbonate, nitroethylene carbonate, cyanoethylene carbonate, and fluoroethylene carbonate. When such a life improver is further used, the amount thereof used may be appropriately adjusted.

In the nonaqueous electrolyte secondary battery of the present invention, a separator may be present between the positive electrode and the negative electrode. As such a separator, polyethylene, polypropylene, polyvinylidene fluoride, or a multilayer having two or more layers thereof may be used, or a mixed multilayer such as a two-layer separator of polyethylene/polypropylene, a three-layer separator of polyethylene/polypropylene/polyethylene, or a three-layer separator of polypropylene/polyethylene/polypropylene may be used.

EXAMPLES

Examples and Comparative Examples will be described below. However, the following Examples are presented to describe the present invention in more detail, and the concept of the present invention is not limited to the following Examples.

(Specific Surface Area as Determined by Nitrogen Adsorption BET Method, and Pore Volume as Determined by NL-DFT Method)

An approximate expression derived from the BET expresion is described below:
[Math 1]

$$\frac{p/p_0}{v(1-p/p_0)} = \frac{1}{v_m c} + \frac{(c-1)p}{v_m c p_0} \qquad \text{(I)}$$

Using the approximate expression (I) described above, $v_m$ was determined by substituting the adsorption volume (v) measured at a predetermined elative pressure ($p/p_0$) by a multipoint method based on nitrogen adsorption at liquid-nitrogen temperatures, and the specific surface area (SSA: the unit is $m^2/g$) of the sample was calculated according to the following expression (II):
[Math 2]

$$\text{Specific surface area} = \left(\frac{v_m N a}{22400}\right) \times 10^{-18} \qquad \text{(II)}$$

In the expressions (I) and (II) described above, vm is the adsorption volume ($cm^3/g$) required to form a monomolecular layer on the sample surface; v is the measured adsorption volume ($cm^3/g$); $p_0$ is the saturated vapor pressure; p is the absolute pressure; c is a constant (reflecting heat of adsorption); N is the Avogadro's number $6.022 \times 10^{23}$; and a ($nm^2$) is the area occupied by an adsorbate molecule on the sample surface (molecular occupied cross section).

Specifically, the adsorption volume of nitrogen adsorbed on carbonaceous materials at liquid-nitrogen temperatures was measured using "Autosorb-iQ-MP" manufactured by Quantachrome Corporation as follows. The carbonaceous material to be measured was loaded into a sample tube. The sample tube was once vacuumed with the sample tube cooled to -196°C (77K). Thereafter, nitrogen (99.999% purity) was adsorbed on the measurement sample at a desired relative pressure. The amount of nitrogen adsorbed on the sample when the equilibrium pressure was reached at each desired relative pressure was defined as the amount of adsorbed gas v. Based on this measured value, the specific surface area was determined by the BET method according to expressions (I) and (II) described above.

Further, the adsorption isotherm obtained from the above nitrogen adsorption measurement was analyzed by the DFT method. The volume of pores with a pore size (pore diameter) of less than 2 nm was calculated as the micropore volume, and the volume of pores with a pore size (pore diameter) from 2 nm to 50 nm as the mesopore volume.

(Oxygen Content as Measured by Elemental Analysis)

Elemental analysis was performed based on the inert gas fusion method using an oxygen/nitrogen/hydrogen analyzer EMGA-930 manufactured by HORIBA, Ltd.

The detection method used by the analyzer was oxygen: inert gas fusion-non-dispersive infrared absorption method (NDIR). Calibration was performed with (oxygen and nitrogen) Ni capsules, TiH2 (H standard sample), and SS-3 (N, O standard sample). 20 mg of the carbonaceous material sample, whose water content was measured at 250°C for about 10 minutes as a pretreatment, was placed in a Ni capsule and degassed in an elemental analyzer for 30 seconds before measurement. The analysis test was performed in triplicate, and the average value was defined as the analytical value (oxygen content (% by mass) in carbonaceous material as measured by elemental analysis: (A)).

(Titration of Functional Group by Boehm Method)

The amounts of functional groups in a carbonaceous material can be determined by a commonly known method, for example, by a method described in detail in Surface, 34[2] (1996) Otowa p.62 or Catal., 1966[16] (US) p.179. Specifically, 2 g of each carbonaceous material sample was placed in a 100-milliliter (mL) Erlenmeyer flask, to which 50 mL of a N/10 alkaline reagent ((a) sodium hydrogencarbonate, (b) sodium carbonate, (c) caustic soda, or (d) sodium ethoxide) was added, followed by shaking for 24 hours and filtration. Unreacted alkaline reagents were titrated with N/10 hydrochloric acid. Since carboxyl groups react with all the reagents (a)-(d), lactone groups with the reagents (b)-(d), hydroxy groups with the reagents (c)-(d), and quinone groups with the reagent (d), the amount of each functional group (meq/g) was determined by subtraction of the titration volumes.

(Percentage of Oxygen Content in Quinone Groups as Measured by Boehm Titration of Functional Groups with Respect to Oxygen Content as Measured by Elemental Analysis)

The percentage of the oxygen content (B) in quinone groups as measured by Boehm titration of functional groups with respect to the oxygen content (A) as measured by elemental analysis in the carbonaceous material was calculated by the following method. Using the amount of quinone groups determined as described above, the oxygen content (% by mass) in quinone groups contained in the carbonaceous material was determined by the following expression (III). Further, the percentage of the oxygen content in quinone groups as measured by Boehm titration of surface functional groups in the carbonaceous material was determined by dividing the determined oxygen content in quinone groups contained in the carbonaceous material by the oxygen content as measured by elemental analysis (expression (IV)).

[Math 3]

$$\text{(Oxygen content in quinone groups)} = ((\text{Amount of quinone group (meq/g)} / 1000) \times 15.9994 \times 100 \; [\% \text{ by mass}] \quad (III)$$

[Math 4]

$$\text{(Percent of the oxygen content in quinone groups to the oxygen content as measured by elemental analysis)} = (B) / (A) \times 100 \, [\%] \quad (IV)$$

(Average Particle Size by Laser Scattering Method)

The average particle sizes (particle size distribution) of plant-derived chars and carbonaceous materials were measured by the following method. Samples were added to an aqueous solution containing 5% by mass surfactant ("ToritonX100" manufactured by Wako Pure Chemical Industries, Ltd.) and treated with an ultrasonic washer for 10 minutes or longer to disperse the samples in the aqueous solution. Using this dispersion, the particle size distribution was measured. The measurement of the particle size distribution was performed using a particle diameter/particle size distribution measurement equipment ("Microtrac MT3300EXII" manufactured by MicrotracBEL Corp.). The D50 value, a particle diameter at which the cumulative volume is 50%, was used as the average particle size.

(Method of Measuring Ash)

The mass of an alumina crucible that had been baked at 900°C with the crucible empty and allowed to cool in a desiccator containing silica gel was measured. 20 g of activated carbon that had been dried in vacuum in a thermostatic oven adjusted to 120°C for 8 to 10 hours and then allowed to cool in a desiccator containing silica gel as a desiccant was placed in the alumina crucible having a capacity of 50 ml, and the crucible mass + the carbonaceous material mass was weighed accurately to the nearest 0.1 mg. The alumina crucible containing a sample was placed in an electric furnace, and with dry air introduced into the electric furnace at 20 L/min, the temperature was increased to 200°C for 1 hour, further increased to 700°C for 2 hours, and held at 700°C for 14 hours for ashing. After the ashing was completed, the crucible and ash were allowed to cool in a desiccator containing silica gel, the mass of crucible + ash was weighed accurately to the nearest 0.1 mg, and the ash content was calculated from expression (V):
[Math 5]

$$\text{Ash content (\% by mass)} = \{[(\text{crucible mass} + \text{ash mass}) - (\text{crucible mass})]/[(\text{crucible mass} + \text{carbonaceous material mass}) - (\text{crucible mass})]\} \times 100 \quad (V)$$

(Water Content)

The hygroscopicity of a carbonaceous material was measured by the Karl-Fischer titration method (coulometric titration method) using a Karl-Fischer moisture meter (CA-200 trace moisture meter, manufactured by Mitsubishi Chemical Analytech Co., Ltd.). For the measurement, 1 g of a carbonaceous material was heated and dried at 120°C and 10 mmHg for 24 hours, followed by measurement of the mass of the residual material. Then, the temperature of the Karl-Fischer moisture meter was set to 250°C to expose the sample to be measured to this temperature, and the water discharged was measured.

(Composition for Lithium Secondary Battery Positive Electrode)

30 parts by mass of an N-methylpyrrolidone solution dissolving 3 parts by mass of polyvinylidene fluoride (KF Polymer 7200 manufactured by Kureha Corporation), 93 parts by mass of $LiNi_{0.33}Co_{0.33}Mn_{0.33}O_2$ ("CELLSEED C" manufactured by Nippon Chemical Industrial Co., Ltd.) as a positive electrode active material, 2 parts by mass of acetylene black ("DENKA BLACK" manufactured by Denka Kagaku Kogyo K.K.) as a conductive additive, and 2 parts by mass of the carbonaceous material prepared in each Example were added and mixed. N-methylpyrrolidone was added to the mixture as appropriate such that the solid content concentration of the positive electrode materials was 50% by mass while being stirred and dispersed using a homomixer manufactured by PRIMIX Corporation (4500 rpm), to obtain a slurry composition for lithium secondary battery electrodes.

(Positive Electrode for Lithium Secondary Batteries)

The slurry composition for lithium secondary battery electrodes was applied to an aluminum foil ("1N30-H", manufactured by Fuji Impex Corp) that is a collector using a bar coater ("T101", manufactured by Matsuo Sangyo Co., Ltd.), and subjected to primary drying with a hot-air drier (manufactured by Yamato Scientific Co., Ltd.) at 80°C for 30 minutes, and then a rolling process using a roll press (manufactured by Hohsen Corp.). Thereafter, the resulting product was punched into an electrode for lithium secondary batteries ($\varphi$14mm), and then subjected to secondary drying at 120°C for 3 hours under reduced conditions to prepare an electrode for lithium secondary batteries (positive electrode). With respect to the water content at this time, the electrode after preparation and drying ($\varphi$14 mm) was subjected to heating to 250°C and measurement of the water content with Karl-Fisher (manufactured by Mitsubishi Chemical Analytech Co., Ltd.) under a flow of nitrogen. The water content was controlled to be 20 ppm or less so that the added carbonaceous material could perform actions other than water absorption.

(Preparation of Lithium-Ion Secondary Batteries)

The electrode for lithium-ion secondary batteries was transferred to a glove box (manufactured by Miwa Manufacturing Co., Ltd.) under an argon gas atmosphere. The electrode for lithium secondary batteries was used as a positive electrode. As a negative electrode, a laminate composed of a metallic lithium foil (thickness: 0.2 mm, $\varphi$: 16 mm) as a negative electrode active material layer, and a steel foil (thickness: 0.2 mm, $\varphi$: 17 mm) as a collector was used.

Polypropylene (SELGUARD#2400, manufactured by Polypore International, Inc.) was used as a separator, and a mixed solvent of lithium hexafluorophosphate (LiPF6), ethylene carbonate (EC) and ethyl methyl carbonate (EMC) with vinylene carbonate (VC) added thereto (1M-LiPF6, EC/EMC = 3/7% by volume, VC: 2% by mass) was used and injected as an electrolyte solution to prepare a coin type lithium secondary battery (type 2032).

[Example 1]

Char (specific surface area: 370 $m^2/g$) made from coconut palm shells from the Philippines was subjected to primary activation at 850°C using propane combustion gas and water vapor (partial pressure of water vapor: 25%). Thereafter, the resulting product was pickled with hydrochloric acid (concentration: 0.5 N, diluent: ion exchanged water) at 85°C for 30 minutes, then washed with ion exchanged water sufficiently to remove residual acid and dried. The specific surface area of the carbonaceous material obtained at this time was 1685 $m^2/g$. The obtained carbonaceous material was subjected to heat treatment under a nitrogen atmosphere at the normal pressure and 900°C for 1 hour. At the time of discharge from the heat treatment, the resulting product was discharged into a container through which nitrogen with a purity of 99.99% passed, and cooled to 200°C or less under a nitrogen gas atmosphere to obtain secondary washed granular carbonaceous material. The granular carbonaceous material was pulverized into a mean particle diameter of 6 $\mu$m, and various physical properties of the obtained carbonaceous material were measured. The results are shown in Table 1.

[Example 2]

A granular carbonaceous material before heat treatment obtained through primary activation, pickling, washing with water, and drying in the same manner as in Example 1 was further subjected to secondary activation using propane combustion gas (partial pressure of water vapor: 15%) at 970°C to obtain a granular carbonaceous material. The specific surface area of the carbonaceous material obtained at this time was 2184 $m^2/g$. The obtained granular carbonaceous material after secondary activation was further pickled at 85°C for 30 minutes, washed sufficiently with ion exchanged water, and dried. Then, the resulting product was subjected to heat treatment under a nitrogen atmosphere at the normal pressure and 900°C for 1 hour. At the time of discharge from the heat treatment, the resulting product was discharged into a container through which nitrogen with a purity of 99.99% passed, and cooled to 200°C or less under a nitrogen gas atmosphere to obtain secondary washed granular carbonaceous material. The granular carbonaceous material was pulverized into a mean particle diameter of 6 $\mu$m, and various physical properties of the obtained carbonaceous material were measured. The results are shown in Table 1.

[Example 3]

A granular carbonaceous material after primary activation (carbonaceous material before heat treatment) having a specific surface area of 1810 $m^2/g$ was obtained through primary activation in Example 1 with an extended activation time, pickling, washing with water, and drying. The granular carbonaceous material was further subjected to secondary activation using propane combustion gas (partial pressure of water vapor: 15%) at 970°C to obtain a granular carbonaceous material. The specific surface area at this time was 1834 $m^2/g$. The obtained granular carbonaceous material after secondary activation was further pickled at 85°C for 30 minutes, washed sufficiently with ion exchanged water, and dried. Then, the resulting product was subjected to heat treatment under a nitrogen atmosphere at the normal pressure and 900°C for 1 hour to obtain secondary washed granular carbonaceous material. The granular carbonaceous material was pulverized into a mean particle diameter of 6 $\mu$m, and various physical properties of the obtained carbonaceous material were measured. The results are shown in Table 1.

[Comparative Examples 1 to 3]

Carbonaceous materials obtained in the same manner as in Examples 1 to 3 except that heat treatment under a nitrogen atmosphere after activation and washing was not performed in Examples 1 to 3 and vacuum drying at 120°C and 1 Torr was performed for 12 hours were correspondingly considered as additives for nonaqueous electrolyte secondary battery positive electrodes of Comparative Examples 1 to 3. The results are shown in Table 1.

[Comparative Example 4]

A carbonaceous material obtained in the same manner as in Example 1 was further heated in a high temperature chamber manufactured by ESPEC CORP., under the atmosphere at 230°C for 3 hours.

[Comparative Example 5]

The same operations as in Example 1 except that the heat treatment was performed at 780°C, and various physical properties of the obtained carbonaceous material were measured. The results are shown in Table 1.

[Table 1]

| | BET specific surface area | Micropore volume | Mesopore volume | Average partial e size D50 | Oxygen content as measured by elemental analysis (A) | Oxygen content in quinone (B) | (B) / (A) × 100 | Ash | Water content |
|---|---|---|---|---|---|---|---|---|---|
| | [m²/g] | [cm³/g] | [cm³/g] | [μm] | % by mass | % by mass | % | % by mass | ppm |
| Ex. 1 | 1301 | 0.52 | 0.06 | 5.70 | 0.98 | 0.43 | 43.6 | 0.19 | 487 |
| Ex. 2 | 1990 | 0.57 | 0.15 | 5.59 | 0.99 | 0.44 | 44.2 | 0.32 | 394 |
| Ex. 3 | 1571 | 0.48 | 0.13 | 5.82 | 0.62 | 0.37 | 59.7 | 0.11 | 288 |
| C. Ex. 1 | 1685 | 0.60 | 0.07 | 5.70 | 1.91 | 0.46 | 23.9 | 0.19 | 943 |
| C. Ex. 2 | 2184 | 0.86 | 0.17 | 5.59 | 2.42 | 0.48 | 19.9 | 0.32 | 720 |
| C. Ex. 3 | 1834 | 0.72 | 0.15 | 5.82 | 1.53 | 0.43 | 28.0 | 0.11 | 670 |
| C. Ex. 4 | 1299 | 0.49 | 0.06 | 5.72 | 3.21 | 2.11 | 65.7 | 0.19 | 664 |
| C. Ex. 5 | 1512 | 0.78 | 0.07 | 5.70 | 1.47 | 0.44 | 29.9 | 0.19 | 707 |

[Battery Properties of Examples 1 to 3 and Comparative Examples 1 to 4]

Using the carbonaceous materials obtained in Examples 1 to 3 and Comparative Examples 1 to 4, lithium-ion secondary batteries were prepared as described above. After measurement of the direct current resistance value before initial charge, charge-discharge tests of the obtained lithium-ion secondary batteries were performed using a charge-discharge test system ("TOSCAT" manufactured by TOYO SYSTEM Co., LTD.). For the direct current resistance, the resistance value at the time when 0.5 mA was applied for 3 seconds was measured. Lithium doping was performed at a rate of 70 mA/g with respect to the mass of the active material. The doping was performed until 1 mV with respect to the lithium potential was achieved. A constant voltage of 1 mV with respect to the lithium potential was further applied for 8 hours, thereby completing doping. The capacity (mAh/g) at this time was considered as charge capacity. Then, dedoping was performed at a rate of 70 mA/g with respect to the mass of the active material until 2.5 V with respect to the lithium potential was achieved, and the capacity discharged at this time was considered as discharge capacity. The percentage of discharge capacity /charge capacity was considered as charge/discharge efficiency (initial charge/discharge efficiency), which was used as an index of use efficiency of lithium ions in batteries. The irreversible capacity was calculated by subtracting the discharge capacity from the charge capacity. The obtained results are shown in Table 2.

[Comparative Example 6]

A lithium-ion battery was prepared in the same manner as in Example 1 except that no carbonaceous material was added, and the battery properties were measured. The obtained results are shown in Table 2.

[Table 2]

| | Charge capaci ty | Discharge capacity | Irreversi ble capacity | Initial charge/dis charge efficiency | Direct current resistance (before charge) |
|---|---|---|---|---|---|
| | mAh/g | mAh/g | mAh/g | % | ($\Omega$) |
| Ex. 1 | 166 | 145 | 21 | 87.3 | 190 |
| Ex. 2 | 166 | 145 | 21 | 87.3 | 186 |
| Ex. 3 | 167 | 146 | 21 | 87.4 | 184 |
| C. Ex. 1 | 166 | 142 | 24 | 85.5 | 209 |
| C. Ex. 2 | 166 | 141 | 25 | 84.9 | 191 |
| C. Ex. 3 | 167 | 141 | 26 | 84.4 | 195 |
| C. Ex. 4 | 177 | 143 | 34 | 80.8 | 212 |
| C. Ex. 5 | 172 | 141 | 31 | 82.0 | 204 |
| C. Ex. 6 | 163 | 143 | 20 | 87.7 | 421 |

The above results show that in Examples that satisfy all the provisions of the present invention, the electrical conductivity of the electrode is improved, the resistance of the electrode is lowered, and the use efficiency of cation species is improved as compared to Comparative Examples that do not satisfy the provisions of the present invention. In particular, even when positive electrode active materials, in which the presence of water has a more significant effect on the performance (in this application, positive electrode active materials with relatively low nickel content), the electrical conductivity of the electrode is improved, the resistance of the electrode is lowered, and the use efficiency of cation species is improved.

Claims

1. An additive for nonaqueous electrolyte secondary battery positive electrodes, comprising a carbonaceous material having a specific surface area as determined by the BET method of from 1,000 m$^2$/g to 2,000 m$^2$/g, a micropore volume as determined by the DFT method of less than 0.60 cm$^3$/g, and an oxygen content as measured by elemental analysis of 0.5% by mass or more and less than 1.3% by mass.

2. The additive for nonaqueous electrolyte secondary battery positive electrodes according to claim 1, wherein the percentage of the oxygen content in quinone groups as measured by Boehm titration of surface functional groups with respect to the oxygen content as measured by elemental analysis is from 30% to 70%.

3. The additive for nonaqueous electrolyte secondary battery positive electrodes according to claim 1 or 2, wherein the average particle size of the carbonaceous material is from 2 $\mu$m to 20 $\mu$m.

4. The additive for nonaqueous electrolyte secondary battery positive electrodes according to any one of claims 1 to 3, wherein the mesopore volume of the carbonaceous material as determined by the DFT method is 0.35 cm$^3$/g or less.

5. A positive electrode active material composition for nonaqueous electrolyte secondary batteries comprising an additive for nonaqueous electrolyte secondary battery positive electrodes according to any one of claims 1 to 4, a positive electrode active material, and a binder.

6. The positive electrode active material composition for nonaqueous electrolyte secondary batteries according to claim 5, wherein the amount of the additive for nonaqueous electrolyte secondary battery positive electrodes contained with respect to the total mass of the positive electrode active material composition is 10% by mass or less.

7. A positive electrode for nonaqueous electrolyte secondary batteries comprising a positive electrode active material layer composed of a positive electrode active material composition for nonaqueous electrolyte secondary batteries according to claim 5 or 6, and a collector.

8. A nonaqueous electrolyte secondary battery comprising a positive electrode according to claim 7.

9. The nonaqueous electrolyte secondary battery according to claim 8, which operates at 2 V to 5 V.

## INTERNATIONAL SEARCH REPORT

International application No.

**PCT/JP2022/003970**

| A. | CLASSIFICATION OF SUBJECT MATTER |
|---|---|

*H01M 4/13*(2010.01)i; *H01M 4/139*(2010.01)i; *H01M 4/62*(2006.01)i; *H01M 10/052*(2010.01)i
FI: H01M4/62 Z; H01M4/139; H01M4/13; H01M10/052

According to International Patent Classification (IPC) or to both national classification and IPC

| B. | FIELDS SEARCHED |
|---|---|

Minimum documentation searched (classification system followed by classification symbols)

H01M4/13; H01M4/139; H01M4/62; H01M10/052

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | JP 2012-59690 A (SAMSUNG SDI CO., LTD.) 22 March 2012 (2012-03-22) | 1-9 |
| A | JP 2016-54113 A (NIPPON ZEON CO) 14 April 2016 (2016-04-14) | 1-9 |
| A | JP 2008-112595 A (HITACHI VEHICLE ENERGY LTD) 15 May 2008 (2008-05-15) | 1-9 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/003970**

| Patent document cited in search report | | | Publication date (day/month/year) | Patent family member(s) | | | Publication date (day/month/year) |
|---|---|---|---|---|---|---|---|
| JP | 2012-59690 | A | 22 March 2012 | US | 2012/0064398 | A1 | |
| | | | | EP | 2429020 | A1 | |
| | | | | KR | 10-2012-0027780 | A | |
| | | | | CN | 102403493 | A | |
| JP | 2016-54113 | A | 14 April 2016 | (Family: none) | | | |
| JP | 2008-112595 | A | 15 May 2008 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021017338 A
- JP 2001126766 A
- JP 2014026819 A
- JP 2004296431 A
- JP 2020013881 A
- JP 5027849 B

**Non-patent literature cited in the description**

- *Surface,* 1996, vol. 34 (2), 62
- *Catal.,* vol. 1966 (16), 179